# EUROPEAN PATENT APPLICATION

(11) **EP 4 607 720 A1**
(43) Date of publication of application: **27.08.2025**
(21) Application number: 23879174.3
(22) Date of filing: 19.10.2023
(51) Int. Cl.: H01R 27/02, H01R 13/514, H01R 13/73

(54) **COMBINED WIRE HARNESS STRUCTURE, AND VEHICLE**

(30) Priority: 20.10.2022 CN 202222777815 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2023/125413
(87) International publication number: WO 2024/083188

(57) **Abstract**

The present disclosure provides a combined wire harness structure, and a vehicle. The combined wire harness structure of the present disclosure arranges wire harnesses in categories by splicing different connector unit modules carrying corresponding wire harnesses through connecting units. Moreover, when spliced with each other, the connector unit modules carrying different types of wire harnesses are disposed in layers, so as to increase the space utilization rate and significantly improve the wiring aesthetics of the wire harnesses. The combined wire harness structure with the wire harnesses arranged in layers and categories enables a quick location and a maintenance or a replacement in sections in case of a fault, so that all signal wires as well as power wires with a current less than 1A on the trunk of wire harnesses of a whole vehicle can adopt flat cables, and the flat cables can be applied to the trunk of large wire harnesses. The structure is simple, which is conducive to the wide promotion and use of the flat cables in a vehicle, which can significantly decrease the weight of the whole vehicle, thereby reducing the energy consumption and improving the driving range of the vehicle.

## Description

### CROSS-REFERENCE TO RELATED APPLICATIONS

The present disclosure claims priority to Chinese Patent Application No. 202222777815.3 filed on October 20, 2022, which is hereby incorporated by reference in its entirety.

### TECHNICAL FIELD

The present disclosure relates to the field of automobile design and manufacturing, and particularly to a combined wire harness structure and a vehicle.

### BACKGROUND

Compared to traditional gasoline-powered vehicles, new energy vehicles incorporate numerous additional electrical components, significantly increasing the complexity of their whole circuit systems. To enhance the aesthetics of wiring and reduce the weight of the whole vehicle, the use of flat cables, such as Flexible Printed Circuit (FPC), as a replacement for some traditional wire harnesses is gradually becoming a new development trend. However, due to the limited current-carrying capacity of flat cables, they are unable to transmit signals of high currents or of special cables and are restricted to transmitting small current signals of 1A or less. Additionally, the flat cables cannot be used for special cables. Therefore, in order to enable all signal wires and power wires carrying less than 1A of current in the harness trunk of the whole vehicle to adopt flat cables, and to allow flat cables to be applied to the trunk of large wire harnesses, there is an urgent need to design a combined harness structure capable of arranging wire harnesses in categories.

### SUMMARY

In view of the above content, the present disclosure aims to provide a combined wire harness structure, and a vehicle, so as to solve the technical problems mentioned in the Background section.

In order to achieve the above objective, the present disclosure adopts the following technical solution: a combined wire harness structure, including a plurality of connector unit modules configured to be spliced with each other, an outer wall of each of the connector unit modules being provided with at least one connecting unit for connecting to other connector unit modules. The connector unit module at least includes at least one first connector unit configured to accommodate a flat cable, at least one second connector unit configured to accommodate a large-diameter wire harness and at least one third connector unit configured to accommodate a special cable. The connector unit modules carrying corresponding wire harnesses are spliced with each other through the connecting units.

In some embodiments, when spliced with each other, the connector unit modules carrying different types of wire harnesses are disposed in layers.

In some embodiments, the first connector unit, the second connector unit and the third connector unit are sequentially disposed from bottom to top.

In some embodiments, extension directions of the first connector unit, the second connector unit and the third connector unit are at angles.

In some embodiments, an end surface of the first connector unit, which is fitted with the second connector unit, is provided with a plurality of connecting units, and the plurality of connecting units are arranged at intervals along a length direction of the first connector unit.

In some embodiments, the connecting unit is a clamping component disposed on an outer wall of the connector unit module.

In some embodiments, the connecting unit is a magnetic component embedded on an outer wall of the connector unit module.

In some embodiments, the combined wire harness structure further includes at least one clamping member, through which at least one of the connector unit modules is connected to a vehicle body.

In some embodiments, the clamping member includes a connecting portion matched with the connecting unit and a clamping portion for being connected to the vehicle body.

The present disclosure further provides a vehicle including the aforementioned combined wire harness structure.

Compared with the prior art, the present disclosure has the following advantageous effects:
1. The combined wire harness structure of the present disclosure arranges wire harnesses in categories by splicing different connector unit modules carrying corresponding wire harnesses through connecting units; meanwhile, during splicing, the connector unit modules carrying different types of wire harnesses are disposed in layers, so as to increase the space utilization rate and significantly improve the wiring aesthetics of the wire harnesses.
2. The combined wire harness structure with the wire harnesses arranged in layers and categories enables a quick location and a maintenance or a replacement in sections in case of a fault, so that all signal wires as well as power wires with a current less than 1A on the trunk of wire harnesses of a whole vehicle can adopt flat cables, and the flat cables can be applied to the trunk of large wire harnesses. The structure is simple, which is conducive to the wide promotion and use of the flat cables in a vehicle, which can significantly decrease the weight of the whole vehicle, thereby reducing the energy consumption and improving the driving range of the vehicle. It has been verified that by using the flat cables to replace some traditional wire harnesses, the overall weight of the wire harnesses is decreased by approximately 50%, and the volume thereof is decreased by approximately 60%.
3. The combined wire harness structure of the present disclosure can be conveniently fixed by just one clamping member, which greatly reduces the number of holes opened in the vehicle body and avoids the influence of a large number of holes on the strength of the vehicle body.

### BRIEF DESCRIPTION OF THE DRAWINGS

The drawings, which are incorporated in and constitute a part of the specification, illustrate the embodiments of the present disclosure and, together with the description, serve to explain the principles of the present disclosure.
FIG. 1 illustrates an overall structural diagram of a combined wire harness structure according to the present disclosure;
FIG. 2 illustrates a schematic diagram of a connection relationship between a first connector unit and a clamping member according to an embodiment;
FIG. 3 illustrates a schematic diagram of a connection relationship between two connecting units spliced with each other when the connecting unit adopts a clamping component; and
FIG. 4 illustrates a schematic diagram of a state where extension directions of a first connector unit, a second connector unit and a third connector unit are at angles according to an embodiment.

### Reference numerals:

1: connector unit module;
2: connecting unit; 201: clamping block; 202: slideway;
3: clamping member; 301: connecting portion; 302: clamping portion;
20: first connector unit;
30: second connector unit;
40: third connector unit;
50: flat cable;
60: large-diameter wire harness;
70: special cable.

### DETAILED DESCRIPTION OF THE EMBODIMENTS

Various exemplary embodiments of the present disclosure will now be described in detail with reference to the drawings. It should be noted that the relative arrangements, numerical expressions and numerical values of components and steps set forth in these examples do not limit the scope of the present disclosure unless otherwise specified.

The following description of at least one exemplary embodiment is merely illustrative in nature, and is in no way intended to limit the present disclosure, and the applications or uses thereof.

Techniques, methods and devices known to those skilled in the relevant art may not be discussed in detail, but they should be regarded as part of the specification under appropriate circumstances.

In all examples shown and discussed herein, any specific value should be interpreted as illustrative only rather than a limitation. Therefore, other examples of the exemplary embodiments may have different values.

As well known, since there are many types of signal wire harnesses (signal wires, power wires, the Ethernet, etc.) on the trunk of large wire harnesses, ordinary flat cables can only be applied to a tiny harness with a simple loop or a branch of a large wire harness, and only applied to a wire harness loop that merely contains low-current power wires (less than 1.0A) and signal wires. Therefore, in order to enable all signal wires and power wires carrying less than 1A of current in the harness trunk of the whole vehicle to adopt flat cables, and to allow flat cables to be applied to the trunk of large wire harnesses, there is an urgent need to design a combined harness structure capable of arranging wire harnesses in layers and categories.

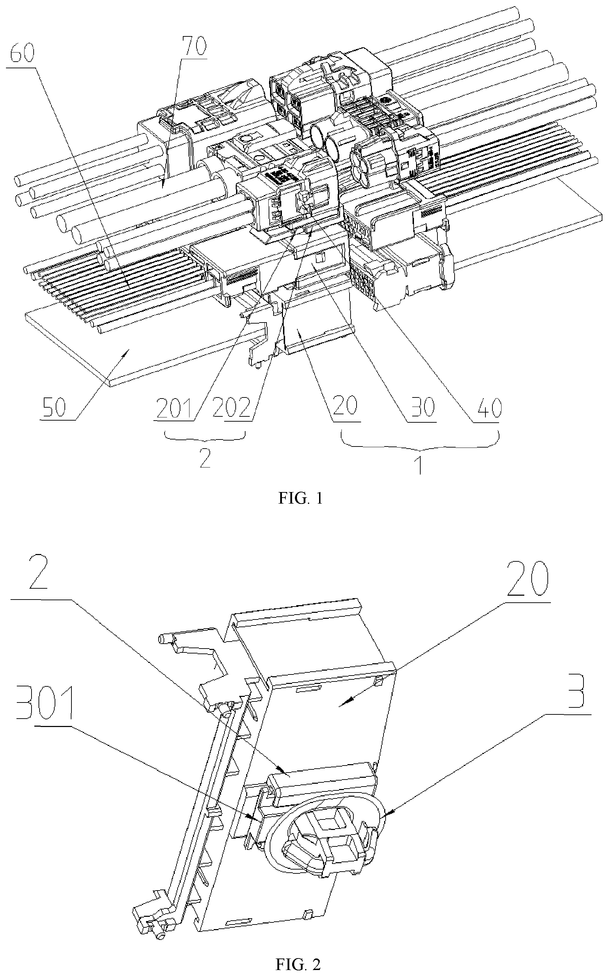

The present disclosure provides a combined wire harness structure, as illustrated in FIG. 1, which includes a plurality of connector unit modules 1 configured to be spliced with each other. An outer wall of each of the connector unit modules 1 is provided with at least one connecting unit 2 for connecting to other connector unit modules 1. Here, in order to improve the universality of the combined wire harness structure on the whole vehicle, the connecting units 2 may be disposed on all end surfaces of the connector unit modules 1. Alternatively, in order to save costs, the connecting units 2 may also be disposed only on the end surfaces that are configured to be connected with other connector unit modules 1, and it is unnecessary to limit the specific number of the connecting units 2 on each of the end surfaces, which may be set as required. In addition, the flat cable mentioned in the present disclosure refer to a deformable sheet-shaped cable such as a Flexible Printed Circuit (FPC) cable or a Flexible Flat Cable (FFC), and the "flat cable" is a general term thereof.

The connector unit module 1 at least includes at least one first connector unit 20 configured to accommodate a flat cable 50, at least one second connector unit 30 configured to accommodate a large-diameter wire harness 60 and at least one third connector unit 40 configured to accommodate a special cable 70. The special cable 70 may be Ethernet cable, FAKRA cable or HSD cable, etc. Different connector unit modules 1 carrying corresponding wire harnesses are spliced with each other through the connecting units 2, so that the wire harnesses can be arranged in categories, and the requirement for the interior space of the vehicle can be reduced. It should be noted here that during splicing, not all types of connector units need to be used in any application scenario, which may be selected by users as required.

Additionally, during splicing, the connector unit modules 1 carrying different types of wire harnesses are disposed in layers, so as to increase the space utilization rate and significantly improve the wiring aesthetics of the wire harnesses. It should be noted here that when a single connector unit is not sufficient to accommodate all wire harnesses of the same type, connector units of the same type may be spliced on the left and right sides of the single connector unit. Alternatively, considering the rationality of the layout and the requirement of the space, connector units of the same type may also be spliced on the upper and lower sides of the single connector unit. The combined wire harness structure with the wire harnesses arranged in layers and categories enables a quick location and a maintenance or a replacement in sections in case of a fault. In this way, all the signal wires as well as the power wires with a current less than 1A on the trunk of the wire harnesses of the whole vehicle can adopt the flat cable 50, and the flat cable 50 can be applied to the trunk of the large wire harnesses. The structure is simple, which is conducive to the wide promotion and use of the flat cable 50 in vehicles, which can significantly decrease the weight of the whole vehicle, thereby reducing the energy consumption and improving the driving range of the vehicle. It has been verified that by using the flat cables 50 to replace some traditional wire harnesses, the overall weight of the wire harnesses is decreased by approximately 50%, and the volume thereof is decreased by approximately 60%.

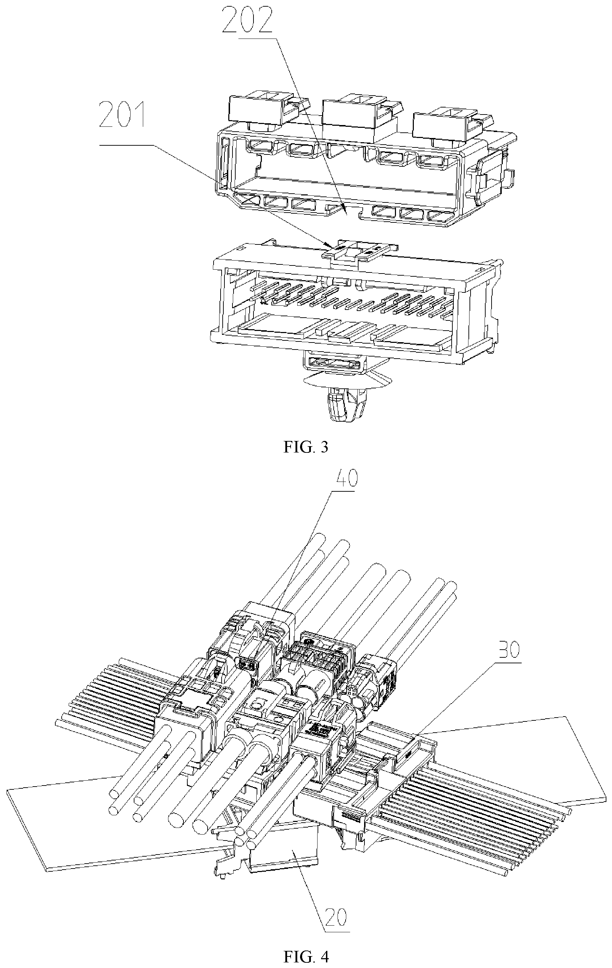

In an embodiment, the first connector unit 20, the second connector unit 30 and the third connector unit 40 are sequentially disposed from bottom to top, so as to realize a transition from the trunk to the branches. In this embodiment, the signal wires as well as the power wires with a current less than 1A are arranged in the lowermost first connector unit 20 using the flat cable 50, so that the first connector unit 20 is a flat cable connector; the large-diameter wire harnesses 60, such as the power wires with a current greater than 1A and the shielding wires, are arranged in the intermediate second connector unit 30, so that the second connector unit 30 is an ordinary wire harness connector which may be crimped with wire harnesses through terminals and then matched with a sheath; the special cables 70 or cables such as the Ethernet cables are arranged in the uppermost third connector unit 40, so that the third connector unit 40 may be an Ethernet connector, a MINI FAKRA connector, a special cable connector or the like. Further, in order to make different connector units have different outlet angles and improve the applicability of the present disclosure, extension directions of the first connector unit 20, the second connector unit 30 and the third connector unit 40 may be set at certain angles. In other words, the first connector unit 20, the second connector unit 30 and the third connector unit 40 are extended in different directions rather than being parallel to each other, as illustrated in FIG. 4. The setting of the specific angles may be adjusted or customized by those skilled in the art as required.

In an embodiment, since the first connector unit 20 configured to accommodate the flat cable 50 is generally long, the first connector unit 20 may be provided with a plurality of connecting units 2 on its end surface fitted with the second connector unit 30, and the plurality of connecting units 2 are arranged at intervals along a length direction of the first connector unit 20, so that a plurality of second connector units 30 can be disposed at the top of one first connector unit 20, thereby further improving the space utilization rate.

In an embodiment, the connecting unit 2 is a clamping component disposed on an outer wall of the connector unit module 1. Specifically, the clamping component includes a clamping block 201 and a slideway 202 that are disposed on the outer walls of the connector unit modules 1 fitted with each other. Rapid splicing can be realized by pushing the clamping block 201/the slideway 202 disposed on one of the connector unit modules 1 into the slideway 202/the clamping block 201 disposed on another connector unit module 1, as illustrated in FIG. 3. It should be noted here that realizing the splicing of different modules by the clamping block 201 and the slideway 202 is a conventional technical means in the art, which will not be described in detail here.

In another embodiment, the connecting unit 2 is a magnetic component embedded on an outer wall of the connector unit module 1. It should be noted here that magnetic components, which are disposed on the outer walls of two connector unit modules 1 fitted with each other, have opposite polarities. The magnetic component has the advantages of quick connection and convenient disassembling compared with the clamping component.

In addition, in order to improve the connection stability of each connector unit module 1 after splicing, connecting pieces such as fixing belts, ropes, adhesive tapes, connecting plates or the like may be used to conduct simple fixing on the outer side of the combined wire harness structure, so as to improve the stability of signal transmission of each wire harness in the combined wire harness structure.

In an embodiment, as illustrated in FIG. 2, the combined wire harness structure of the present disclosure further includes at least one clamping member 3, through which at least one of the connector unit modules 1 is connected to a vehicle body. In an embodiment of the present disclosure, the clamping member 3 may be disposed at the bottom of the lowermost connector unit module 1. The combined wire harness structure of the present disclosure can be conveniently fixed by just one clamping member 3, which greatly reduces the number of holes opened in the vehicle body and avoids the influence of a large number of holes on the strength of the vehicle body. Due to the increasing functions of the new energy vehicles, the number of wire harnesses used will inevitably increase. Therefore, the combined wire harness structure of the present disclosure will gradually become a future trend.

Further, in order to reduce the number of grooves and improve the universality of the present disclosure, the top of the clamping member 3 is provided with a connecting portion 301 matched with the connecting unit 2, and the bottom of the clamping member 3 is provided with a clamping portion 302 fitted with the vehicle body. The clamping portion 302 may be a snap-in structure, which is matched with an oblong hole having a width of 7 mm and a length of 12 mm reserved on the vehicle body, thereby realizing convenient assembling.

The present disclosure further provides a vehicle, which includes the aforementioned combined wire harness structure. By adopting the combined wire harness structure of the present disclosure to systematically categorize and manage all the wire harnesses on the whole vehicle, it is possible to achieve the adaption of all types of wire harnesses on the trunk and branches of the wire harnesses of the whole vehicle, and the application ratio of the flat cables in the wire harnesses of the whole vehicle will be increased from less than 10% currently to 60% to 80%, which can meet the transmission of signals and power for all types of wire harnesses while avoiding the application limitation of the flat cables, thereby greatly increasing the application ratio of the flat cables in the whole vehicle. It has been verified that the combined wire harness structure of the present disclosure can achieve the following effects:
1. Weight: after most of the signal wires and the power wires with a low current in the wire harnesses of the whole vehicle adopt the flat cable 50, the weight of the wire harnesses is reduced by 50% or more compared with that when all the wire harnesses are conventional.
2. Volume: after the adaptor connector is used in large wires harnesses such as the wire harnesses on the floor of the whole vehicle, the layout of the whole vehicle can be adjusted, the trunk of the harnesses is arranged from the middle of the vehicle body to present a tree-like layout as a whole, and the volume of the wire harnesses is reduced by 60% or more.
3. Convenience of maintenance: after the use of such type of connectors, the wire harnesses are arranged in layers and categories, so it is possible to achieve a quick location and a maintenance or a replacement in sections in case of a fault of the wire harnesses.

Although some specific embodiments of the present disclosure have been described in detail by way of example, those skilled in the art will appreciate that the above examples are only for illustration and are not intended to limit the scope of the present disclosure. It should be understood by those skilled in the art that the above embodiments can be modified without departing from the scope and the spirit of the present disclosure. The scope of the present disclosure is defined by the appended claims.

## Claims

1. A combined wire harness structure, comprising a plurality of connector unit modules configured to be spliced with each other, an outer wall of each of the connector unit modules being provided with at least one connecting unit for connecting to other connector unit modules, wherein the connector unit module at least comprises:
at least one first connector unit configured to accommodate a flat cable;
at least one second connector unit configured to accommodate a large-diameter wire harness; and
at least one third connector unit configured to accommodate a special cable;
wherein the connector unit modules carrying corresponding wire harnesses are spliced with each other through the connecting units.

2. The combined wire harness structure according to claim 1, wherein when spliced with each other, the connector unit modules carrying different types of wire harnesses are disposed in layers.

3. The combined wire harness structure according to claim 2, wherein the first connector unit, the second connector unit and the third connector unit are sequentially disposed from bottom to top.

4. The combined wire harness structure according to claim 3, wherein extension directions of the first connector unit, the second connector unit and the third connector unit are at angles.

5. The combined wire harness structure according to claim 3, wherein an end surface of the first connector unit, which is fitted with the second connector unit, is provided with a plurality of connecting units, and the plurality of connecting units are arranged at intervals along a length direction of the first connector unit.

6. The combined wire harness structure according to claim 1, wherein the connecting unit is a clamping component disposed on an outer wall of the connector unit module.

7. The combined wire harness structure according to claim 1, wherein the connecting unit is a magnetic component embedded on an outer wall of the connector unit module.

8. The combined wire harness structure according to claim 1, further comprising at least one clamping member, through which at least one of the connector unit modules is connected to a vehicle body.

9. The combined wire harness structure according to claim 8, wherein the clamping member comprises a connecting portion matched with the connecting unit and a clamping portion for being connected to the vehicle body.

10. A vehicle, comprising the combined wire harness structure according to any one of claims 1 to 9.
